# EUROPEAN PATENT SPECIFICATION

(11) **EP 2 125 907 B1**
(45) Date of publication and mention of the grant of the patent: **21.11.2012**
(21) Application number: 07723439.1
(22) Date of filing: 20.03.2007
(51) Int. Cl.: C08F 8/50, C08J 3/20, C08J 3/28, C08J 5/10, C08K 5/00, C08F 8/00

(54) **OXIDATION RESISTANT HIGHLY-CROSSLINKED UHMWPE**
OXIDATIONSBESTÄNDIGES HOCHVERNETZTES UHMWPE
UHMWPE HAUTEMENT RÉTICULÉ RÉSISTANT À L'OXYDATION

(43) Date of publication of application: 02.12.2009
(73) Proprietor: Smith & Nephew Orthopaedics AG, 6343 Rotkreuz (CH)
(72) Inventor: BRUNNER, Lorenz, 8044 Zürich (CH); DIRIX, Yvo, 8703 Erlenbach (CH); SCHMOTZER, Hans, 8903 Birmensdorf (CH)
(74) Representative: Popp, Eugen
(86) International application number: PCT/EP2007/002477
(87) International publication number: WO 2008/113388

(56) References cited:
- WO-A-01/80778
- US-B1- 6 277 390
- ORAL E ET AL: "Characterization of irradiated blends of alpha-tocopherol and UHMWPE" BIOMATERIALS, ELSEVIER SCIENCE PUBLISHERS BV., BARKING, GB, vol. 26, no. 33, November 2005 (2005-11), pages 6657-6663, XP004989123 ISSN: 0142-9612

## Description

### Background of the Invention

Ultra-high molecular weight polyethylene (UHMWPE) is the most commonly used bearing material in total joint replacements and was introduced by John Charnley in the early 1960s (The UHMWPE Handbook, edited S. Kurtz, Elsevier, 2004). Since then, a wide variety of applications have been developed in the total joint arthroplasty, as a result of the material's high toughness and good mechanical properties. Although "conventional" UHMWPE has an excellent clinical record, the maximum lifetime of implant systems is restricted due to the wear particles released from the UHMWPE bearing surface (Willert H.G., Bertram H., Buchhorn G.H., Clin Orthop 258, 95, 1990). These wear particles can induce an osteolytic response in the human body leading to local bone resorption and eventually to aseptic loosening of the artificial joint. A second problem associated with conventional, gamma-sterilized UHMWPE, is the oxidative degradation that occurs during shelf ageing. The energy of the gamma rays is sufficient to break some of the carbon-carbon or carbon-hydrogen bonds of the polyethylene chains resulting in the formation of free radicals. These radicals partially recombine but some of them are long-living and can react with oxygen present in, or diffusing into, packaging surrounding the implant (Costa L., Jacobson K., Bracco P., Brach del Prever. E.M., Biomaterials 23, 1613, 2002). The oxidative degradation reactions lead to embrittlement of the material and therewith reduce the mechanical properties of the material and might lead to fracture of the implant (Kurtz S.M., Hozack W., Marcolongo M., Turner J., Rimnac C., Edidin A., J Arthroplasty 18, 68-78, 2003).

In the 1970s, highly crosslinked UHMWPEs have been introduced with the intention of improving the wear resistance of the material (Oonishi H., Kadoya Y., Masuda S., Journal of Biomedical Materials Research, 58, 167, 2001; Grobbelaar C.J., du Plessis T.A., Marais F., The Journal of Bone and Joint Surgery, 60-B, 370, 1978). The UHMWPE materials were gamma irradiated at high doses (up to 100 Mrad, this in contrast to gamma sterilization at ∼2.5 Mrad) to promote the crosslinking process in the material and thereby increase the wear resistance. The free radical amount on the polyethylene chains is not or only locally reduced, however, and therefore these materials are prone to oxidative degradation during shelf ageing or in-vivo use.

More recently, the irradiation crosslinking processes have been extended by a thermal treatment to reduce or eliminate the number of free radicals. These processes can be subdivided into three groups:
- Irradiation below the melting temperature followed by annealing below the melting temperature (US5414049, EP0722973). The main disadvantage of this route is the fact that the UHMWPE chains still contain residual free radicals which lead to oxidative degradation (Wannomae K.K., Bhattacharyya S., Freiberg A., Estok D., Harris W.H., Muratoglu O.J., Arthroplasty, 21, 1005, 2006).
- Irradiation below the melting temperature followed by remelting above the melting temperature (US 6228900). The main disadvantage of this processing scheme is that compared with the annealing process, the mechanical properties are reduced by the remelting step (Ries M.D., Pruitt L., Clinical Orthopaedics and Related Research, 440, 149, 2005).
- Irradiation in the melt (US5879400, Dijkstra D.J., PhD Thesis, University of Groningen, 1988). The disadvantage of this process is that the crystallinity is substantially reduced and therewith the mechanical performance.

As a next step, chemical antioxidants have been introduced into medical grade UHMWPE to obtain a wear resistant material that combines a good oxidative stability with sufficient mechanical properties. Most of the common antioxidants exhibit reduced or no biocompatibility, and therefore chemical substances already existing in the human body or in nutritional products were sought. In 1982, Dolezel and Adamirova described a procedure to increase the stability of polyolefins for medical implants against biological degradation in living organisms (CZ 221404). They added alpha-, beta-, gamma- or delta-tocopherol (vitamin E), or a mixture thereof, to polyethylene resin and subsequently processed the resulting mixtures. Besides vitamin E, another class of biologically harmless substances was introduced as oxidation stabilizers in polyethylenes: Hahn described the doping of UHMWPE with carotenoids (e.g. β-carotene) to produce stable and oxidation resistant medical implants (US 5827904). However, the wear and oxidation properties of irradiation crosslinked, β-carotene containing products have not been investigated to date.

Recently, several groups established different processing procedures and combined the addition of vitamin E with a radiation crosslinking step to improve the wear resistance of the material (WO 2005/074619). Several investigators added the vitamin E prior to the consolidation of the UHMWPE powder (JP 11239611, US 6277390, US 6448315, WO0180778); others diffused the liquid vitamin E into machined products, occasionally with the aid of elevated temperatures (CA 256129, WO 2004064618, WO 2005110276).

Disadvantages of the first of these techniques is the production of a material with lower crosslink density (leading to products with-reduced wear resistance) compared with non-stabilized UHMWPE, due to the radical-absorbing properties of the added vitamin E during the actual crosslinking process. Another disadvantage of the processes in WO0180778 is the fact that the implant is machined from a preform that contains vitamin E, this implant is packaged and subsequently irradiated at relatively high doses (> 4 Mrad) which will lead to an increased density of the implant and therefore negatively effect the dimensional stability of the implant. Furthermore, the packaging material is exposed to higher irradiation doses which might decrease the long-term mechanical or barrier properties of the packaging. More preferably, the preformed block or rod is irradiated at higher doses and subsequently the implant is machined with high precision from that material and finally packaged. Moreover, the fabrication of homogeneous products with UHMWPE powder and the liquid, highly viscous vitamin E remains challenging.

The second technique also comprises several drawbacks: Due to the diffusion-controlled doping of UHMWPE products, the depth of the vitamin E level remains uncontrolled, inhomogeneous and limited in its spatial dimensions. Although annealing steps after the actual doping process (which is also carried out at elevated temperatures) partially solve the problem of concentration gradients, the final amount of vitamin E in finished products remains unknown.

Further relevant prior art relating to the present invention is seen in: ORAL E ET AL: "Characterization of irradiated blends of alpha-tocopherol and UHMWPE" BIOMATERIALS, ELSEVIER SCIENCE PUBLISHERS BV., BARKING, GB, vol. 26, no. 33, November 2005 (2005-11), pages 6657-6663. This document discloses a method of adding alpha-tocopherol to UHMWPE to improve oxidation resistance.

### SUMMARY OF THE INVENTION

Given the above-mentioned problems relating to UHMWPE materials with increased crosslinking, it is an objective of the current invention to provide an improved highly crosslinked UHMPWE material, which does not suffer from the increased oxidation properties normally associated therewith. The method of forming the above material is given according to claim 1, and leads to a highly crosslinked material comprising a homogeneous mixture of UHMWPE and an additive material, as is discussed in claim 7. In particular, the method produces a material with a reduced oxidation index after artificial ageing, when compared with that of a normal gamma-sterilized UHMWPE standard material. Such a gamma-sterilized standard UHMWPE material, is one typically used in the medical field for the replacement of joints in implant operations.

The method of claim 1 comprises the steps of combining a quantity of an additive material, which is curcumin, with a UHMWPE powder. Such a combination is then moulded to create a preform by applying a temperature above the melting point of the UHMWPE powder. Upon formation of the preform material, it is irradiated with either gamma or electron beam radiation at a dose of between 2 and 20Mrad. Such an irradiation will lead to an increase in the number of crosslinks between the polymers of the UHMWPE material, which will then lead to an increased wear resistance of the end product. By virtue of the additive material included with the UHMWPE powder prior to moulding, the material formed by this process will have an oxidation index which is the same or lower than that of the gamma-sterilized standard UHMWPE material.

Preferably, the method does not comprise the step of heating the irradiated preform material in order to improve the oxidation index, rather it relies on the presence of the additive material.

### DESCRIPTION

The method of production of the UHMWPE material of the current invention, follows closely the standard method for producing a preform of UHMWPE. The term "preform" is used throughout the current specification to mean a consolidated block, sheet or rod of the UHMWPE material, and in particular one which may then be subjected to further processing and finally from which an end product can be obtained. Obtaining the end product from a preform is done by any of the known standard methods, and most typically is accomplished by removing or machining the unwanted parts of the preform to give the final shaped product. As such, the term preform is intended to encompass any of a wide variety of general forms of the consolidated UHMWPE material, and is perhaps best considered as a simple rectangular block. This perform can be subjected to a stress-relief annealing process as it is mentioned in the ISO 5834-2 Standard.

The formation of the UHMWPE material according to the present invention, begins with mixing a desired quantity of curcumin with the UHMWPE powder. In the examples described hereafter, the UHMWPE powder will be of Ticona GUR^{®} 1020 medical grade UHMWPE; also, other additives will be discursed for comparative purposes, however only curcumin falls under the claimed invention. Such powder is well known and can be commercially obtained. Of course, also any other UHMWPE powders can be used (For example Ticona GUR^{®} 1050, DSM UH210, Basell 1900, UHMWPE powders with a high purity). The additive material which is mixed with the UHMWPE powder is preferably an antioxidant or a radical scavenger. It is preferable that during the mixing process of the additive and UHMWPE powder, that a fully homogeneous mixture will be obtained. Clearly, if a homogeneous starting mixture is used, the additive material will be evenly distributed throughout the final UHMWPE preform.

Once the additive and UHMWPE powder have been mixed, they are moulded into the preform at a temperature which is above the melting point of the UHMWPE powder. At this stage, the temperature is not especially crucial for the moulding step, suffice that it is above the melting point of the UHMWPE powder. Increased temperatures will lead to a more rapid moulding of the material into the preform, as is well known in the art.

Typically, the moulding of the additive material and UHMWPE powder, will be at a temperature which is above the melting point of the UHMWPE powder, but which is also preferably below the degradation temperature of the additive material. Clearly, temperature effects most compounds and indeed the same holds true for the antioxidant or radical scavengers of the additive material. It is preferable, although not necessary, to maintain the temperature of the moulding step below the degradation temperature of this additive material, as this leads to an improved final product. In one aspect of the present invention moulding of the UHMWPE powder is done in an inert atmosphere such as argon or nitrogen.

As is well known in the art, irradiation of the UHMWPE preform by gamma or electron beam radiation, will lead to an increase in the crosslink density between the individual UHMWPE polymers. An equivalent measure of the density of crosslinks of the material, is that of the molecular weight between the crosslinks. Clearly, the higher the crosslink density between the individual UHMWPE polymers, the lower the molecular weight between the crosslinks. Clearly, the inverse is also true, wherein a decrease in the crosslinking density is typified by an increase in the molecular weight between crosslinks. Preferably, the irradiation with the gamma or electron beam is at a dose of between 2 and 20Mrad, which value can be chosen dependent upon the final properties of the UHMWPE material required. Changing the irradiation dose will lead to a difference in the molecular weight between crosslinks, and is intended to be chosen on the basis of the desired final product.

At this stage, an UHMWPE preform has been fabricated which has a decreased molecular weight between crosslinks. This decreased molecular weight is, as is well known in the art, indicative of a material possessed of improved wear characteristics. This increase in the number of crosslinks, leads to a more wear resistant final product, as the individual polymers are more substantially bound to those of its surroundings. As is well known in the art, however, the increase in the number of crosslinks of the UHMWPE material will tend to be accompanied by an increase in the formation of free radicals. This is a clear result of the gamma or electron beam radiation inducing the crosslinking reaction, and leading to the formation of the such.

The generation of free radicals within the UHMWPE preform material is generally undesirable. An increase in free radical content is usually accompanied by an increase in the oxidation of the UHMWPE material upon long term exposure to oxygen or under accelerated ageing conditions as described by ASTM F2003. This results from the free radicals present within the material reacting more readily with oxygen present in the environment of the preform, which will lead to an unwanted degradation in the end properties of the material.

By contrast, the material according the current invention does not suffer from this increase in oxidation, as a result of the gamma or electron beam radiation step. The presence of the additive material dramatically reduces the oxidation of the UHMWPE preform. Indeed, after a step of artificial ageing, as prescribed in ASTM F 2003 in an oxygen bomb at 5 atm oxygen pressure and 70°C for fourteen days, the UHMWPE preform of the current invention shows an oxidation index which is at least the same, or more usually lower, than that of a typical gamma-sterilized standard UHMWPE sample material, in either bulk form, as a preform or after it has been formed into an implant.

A gamma-sterilized standard UHMWPE sample, is considered as being a standard sample for means of comparison in the present invention. This standard sample, is prepared from the same UHMWPE powder as described above, but does not comprise an additive, and is not irradiated by a high dose of gamma or electron beam radiation but the dose level is restricted to 2.5-4.0 Mrad as described in the UHMWPE Handbook (Edited S. Kurtz, Elsevier Academic press, 2004, page 38). After consolidation of the UHMWPE powder by moulding at a temperature above its melting point, the material is sterilized by means of a dosage of gamma radiation. Typically, this sterilisation irradiation step is at a dose of around 3Mrad. Also the UHMWPE sample can be packaged in an inert atmosphere prior to the gamma radiation, as described in the UHMWPE Handbook (Edited S. Kurtz, Elsevier Academic press, 2004, page 38). Such a sterilisation step, is performed for samples which are intended for use as implants into the human body, wherein the samples must be sterilized prior to their use. Additionally, as is clear from the above, such a gamma-sterilized sample is usually formed into the required implant shape prior to the sterilisation step. This forming into the implant shape, has no significant bearing on the relevant properties of the material, in particular with regards the oxidation index.

Looking at the comparative examples provided at the end of the specification, several examples of materials according to the current invention are shown. Additionally, the examples detail the properties of the material according to the present invention at the various stages of the formation process. In these comparative examples, samples are shown with no additive material, an additive of α-tocopherol, curcumin and naringenin. Each of these additive compounds can be considered as antioxidant material, and indeed are natural antioxidant materials which can be found either in the human body or in typical nutrition.

Looking at the data shown in example 4, and especially in Table 4 therein, a comparison of the molecular weight between crosslinks, M_{c}, of numerous samples with and without additive materials and at a variety of irradiation doses, are presented for comparison with the gamma-sterilized UHMWPE sample. As is immediately obvious, the step of irradiating the samples, as shown in Table 4 by a dose of 7 or 14Mrad, leads to a substantial decrease in the molecular weight between crosslinks. Clearly, this decrease in molecular weight between crosslinks is a result of the irradiation and shows an increase in the crosslink density which is associated with an increase in the wear resistance. That is, the material according to the present invention is possessed of a significantly improved wear resistance over the standard gamma-sterilized sample (PE Steri). Whilst radiation doses of only 7 and 14Mrad are shown in Table 4, it is quite clear that the same trend of an increase in the-crosslink density will be seen for a wide range of irradiation doses, and following the general trend that an increase in the dosage leads to an increase in the density of crosslinks, a decrease in the molecular weight between crosslinks as a result and an increase in the wear properties of the final material. As such, it is clear from this example that the material according to the current invention is substantially more wear resistant than the standard UHMWPE material. In light of this improved wear, it is anticipated that such a material would be extremely resilient if utilised as an implant for the body, for example in total joint replacements for the knee, hip, shoulder, ankle, wrist, toe or fingers.

Turning to example 3, the same materials as shown in example 4 are shown with their maximum oxidation index after artificial ageing. This artificial ageing is performed as described above. Immediately evident, is that the gamma-sterilized UHMWPE sample has an maximum oxidation index which is comparable or indeed lower than a UHMWPE preform which has had a high dose gamma or electron beam irradiation step, but which is not provided with an additive material according to the current invention. That is, the samples PE 16 and PE 23 are treated in the same way as described above for the material of the current invention, but have not had an additive material incorporated prior to the moulding step. These materials are treated with the electron or gamma irradiation step, and the maximum oxidation index is shown in Table 3. Clearly, the samples which have been irradiated with 7 or 14Mrad and possess no additives, will have increased wear characteristics, as can be seen in Table 4, but they also have an increased oxidation index as a result of the increased radiation dosage. As has been discussed above, this increased oxidation index is undesirable, as it means that the UHMWPE preform will oxidise more readily during storage or in use as an implant, which will lead to an embrittlement of the material and significant complications such as increased wear or fatigue failure of the implant.

Turning to the four samples in which an additive material is incorporated with the UHMWPE powder prior to moulding of the preform, the oxidation index after ageing is seen to be significantly reduced for the samples of α-tocopherol, curcumin and naringenin. In fact, at best the oxidation index after artificial ageing, is approximately five times lower than that of the gamma-sterilized sample. This is an extremely significant result, as it shows that the UHMWPE material according to the present invention, is possessed of both a significantly improved wear characteristic compared with the standard gamma-sterilized UHMWPE material, and furthermore a much better resistance to oxidation during storage or use. Both of these properties are of considerable advantage in the formation of implant parts: there is a clear improvement in the storage time of the implant parts prior to use, as well as an improvement in the oxidation characteristics whilst in use, coupling this with the improved wear characteristics while in use, will lead to a lengthening of the lifetime of the implant.

Numerous mechanical properties of the materials are shown in example 5, and are presented in Table 5 therein. As can be seen from this table, the yield stress, tensile strength, elongation at break and fracture toughness of materials according to the current invention, are compared with a standard material which is possessed of no additive. This example and results therein clearly show that the addition of the additive material in minor quantities does not have any significant detrimental effects to the final mechanical properties of the UHMWPE material with an additive. Not only, therefore, do the materials according to the present invention show an improvement in oxidation characteristics as compared with a material not comprising the additive, but the provision of the additive does not significantly affect the final mechanical properties. Again, this is of significant advantage when the material is to be used as an implant, as it shows that the material has maintained its integrity, and is still of use as an implant.

As can be seen in Table 5 of example 5, as well as Table 1 of example 1, the processing temperatures for the materials are either 170°C or 210°C. These values are generally chosen such that they are above the UHMWPE melting point, thereby allowing the moulding of the powder into the preform, but below the degradation temperature of the pure additive material. These temperature values are shown purely by way of example, and are not intended in any way to limit the range of the temperatures which may be applied to the UHMWPE powder and additive material during moulding. Indeed, it is conceivable to use lower temperatures and an increased time at the moulding stage, or higher temperatures and a reduced time for fabricating the preform. Additionally, whilst it is desirable to maintain the temperature below the degradation temperature of the pure additive material, even applying a temperature above the degradation temperature during the moulding step will lead to significant improvements in the oxidation resistance of the UHMWPE with additive preform.

Further, the materials shown as additives in each of the 5 comparative examples, are also not intended as specific limitations as to the choice of materials. Indeed, it is quite possible to choose from a wide range of antioxidants or free radical scavenging materials. Preferably, these antioxidant materials are chosen such that they are not water soluble, not soluble in new born calf serum, are lipophilic, biocompatible and are generally natural antioxidants which are present in human nutrition. Additionally, materials that form the precursors of antioxidants and which can be converted by the human body into antioxidants are also considered as possible alternatives.

Appropriate materials which fall into the above categories, are materials chosen from the carotenoid family, or also the flavonoid group of materials. Examples of carotenoids are those of β-carotene and lycopene, and examples of flavonoids are naringenin, hesperitin and luteolin. Further compounds which are also appropriate as the additive material, are: propyl gallate, octyl gallate, dodecyl gallate, melatonin, eugenol and coenzym Q10. Whilst specific data is not presented in the comparative examples 1 to 5, the abovementioned compounds are all active antioxidants and are appropriate as choices for the additive material in the UHMWPE material of the present invention.

As can be seen from the above, the method of formation of the UHMWPE material according to the present invention, is suitable to provide a wear resistant UHMWPE material which is also possessed of excellent oxidation resistance. A further additional advantage of the current material and method of production, is that the improved oxidation characteristics of the material are achieved without performing a specific annealing step on the irradiated preform. That is, there is no necessity of - - annealing the irradiated preform material in order to improve the oxidation characteristics, as the additive material provides these desirable properties.

A further property of the material of the present invention, is that of the free radical content after irradiation. Example 2 shows in Table 2 the free radical content of the irradiated materials as an ESR signal. That is, the free radical content is measured by electron spin resonance of the material at room temperature and between one and four weeks after the irradiation step. Again, the materials are the same as those seen in examples 3 to 5, and are provided with the comparison with the gamma-sterilized sample. Immediately evident from the data in Table 2, is that the free radical content as judged by the ESR signal, is actually higher than that of the gamma-sterilized preform standard. As has been discussed above, the step of irradiating the samples will increase the crosslink density whilst also increasing the number of generated free radicals. In light of this, it is expected that the gamma-sterilized standard preform will not generate an excessive number of free radical, as it has not had such a high dose of irradiation in order to form an increased number of crosslinks. It is particularly interesting to note that the free radical content of the material according to the present invention, whilst being higher than that of the gamma-sterilized standard UHMWPE preform, does not influence the oxidation characteristics of the material. That is, the ESR signal of the material according to the present invention is generally higher than that of the gamma-sterilized standard preform, whilst the oxidation index of such samples is lower than that of the gamma-sterilized standard material. Whilst it is well known in the art that an increased free radical content will lead to an increased oxidation of the UHMWPE material (The UHMWPE Handbook, Edited S. Kurtz, Elsevier Academic press, 2004, Chapter 11), this does not hold true for the material according to the present invention. This is clearly shown with comparison of Table 2 and 3 from examples 2 and 3.

Two possible mechanisms of how the material according to the present invention can have a higher resistance to oxidation whilst having a higher free radical content than that of the gamma-sterilized standard sample are presented:

The first possibility is that the additive material is actually providing an active binding site for the free radicals contained within the material. That is, the free radicals are still clearly present within the material according to the present invention, but are not able to participate in any oxidation reactions. This is supported by the high ESR signal and the low oxidation index value. It is quite clear, therefore, that the presence of the additive material is having a significant effect on the ability of the free radicals to react with oxygen which is present in the vicinity of the UHMWPE material. It is considered that the additive material is in some way binding the free radicals either to itself or within the polymer structure, such that the free radicals cannot react with any oxygen present, which leads to the significant improvement in the oxidation properties of the material.

A second possibility as to why the material according to the present invention has a low oxidation index in spite of a high free radical content, is the specific reaction of the additive material with oxygen present in the vicinity of the preform. In this scenario, the free radicals are still present within the UHMWPE material, but these are less reactive with the oxygen in the environment than the additive material itself. That is, the additive material of the antioxidant or free radical scavenger, is possessed of a higher reactivity with oxygen than the free radicals, and as a result reacts with the oxygen before the free radicals. This would explain why a high free radical content may be tolerated within the UHMWPE material of the current invention, whilst also providing the significantly improved oxidation characteristics. That is, oxidation of the UHMWPE material by reaction of the free radicals contained therein, simply does not happen as it is energetically more favourable to react with the additive material.

Whilst the above two scenarios are presented independently, it is also quite likely that both play a part in the properties of the present material. That is, the free radicals could be bound to some degree to the additive material, and additionally the additive material could be energetically more likely to react with the oxygen present in the environment of the sample.

Looking at the molecular weight between crosslinks of Table 4 in example 4, the values for the samples prepared according to the current invention have values lower than that of the gamma irradiated standard UHMWPE preform. Indeed, the material according to the present invention is expected to have a molecular weight between crosslinks after irradiation of the preform of between 15 and 70% lower than that of the gamma-sterilized standard UHMWPE preform. Clearly, these are advantageous values, as they show a material with significantly improved wear characteristics. Preferably, the molecular between crosslinks is below 6000g/mol.

As is further evident from the data shown in Table 3 of example 3, and as discussed above, the material according to the present invention has a maximum oxidation index after artificial ageing which is below that of the gamma-sterilized UHMWPE sample. In fact, the material according to the present invention will have a maximum oxidation index after artificial ageing of between 5 and 75% that of the gamma-sterilized UHMWPE sample. That is, the material is expected to have an oxidation index after artificial ageing which is below 0.35.

As can be seen in Table 2 of Example 2, the ESR signal typifying the free radical content of the UHMWPE material according to the present invention, is higher than that of the gamma irradiated standard sample. It is expected, that the free radical content of the irradiated preform according to the current invention will lie between 110 and 500% that of the gamma-sterilized standard UHMWPE sample.

Whilst all of the comparative examples in 1 to 5 list the amount of additive as being 0.1% w/w, this is shown purely by way of example. It is anticipated, that an amount of additive material lying in the range of 0.001 to 0.5 weight % will provide an effective material according to the present invention. Preferably, the amount of additive material will lie in the range of 0.02 to 0.2 weight %. Such an amount of additive material, will give the desired improvement to the oxidation characteristics, without significantly weakening and degrading the mechanical properties of the highly crosslinked UHMWPE material.

As was discussed above, the comparative examples show only two doses for the irradiation, that of 7 and 14Mrad. It is expected, that a dose between 2 and 20Mrad of either gamma or electron beam radiation will be sufficient to give the improved crosslink density, for the improved wear characteristics of the final sample. It is preferable, that the dose applied in the irradiation step, lies within the range of about 4 and 15Mrad, as this provides sufficient crosslinking without further sample damage.

As was discussed above, the material according to the present invention is considered as being appropriate for producing implant parts. As such, the irradiated preform can be further treated by shaping it into the relevant shape for the implant material. After the shaping of the implant, it is necessary to sterilise the material such that it can be stored and then readily used during an operation. In order to sterilise the implant part, the implant can be packaged in a gas barrier packaging using a protective atmosphere such as nitrogen or argon and sterilized with a further gamma irradiation step at between 2 and 4Mrad. The implant can also be packaged in a gas permeable packaging and subsequently sterilized using either ethylene oxide or a gas plasma. Once such an implant has been packaged and sterilized, it can be stored safely until required during an operation. The significant advantage of the implants produced from a material according to the present invention, are that the oxidation of the material is significantly reduced over that of the standard UHMWPE material making the implant, which will allow for a substantially increased shelf life.

### Comparative Examples:

For all samples, the following products were used: GUR^{®} 1020 medical grade UHMWPE (Ticona GmbH, Germany), (±)-α-tocopherol (Vitamin E, BioChemika, Sigma-Aldrich Chemie GmbH, Switzerland), curcumin (from curcuma longa, powder, Sigma-Aldrich Chemie GmbH, Switzerland) and (±)-naringenin, (Sigma-Aldrich Chemie GmbH, Switzerland).

### Example 1:

Samples were produced in a "semi-industrial" size, 225 x 225 x 45 mm³. UHMWPE GUR^{®} 1020 was processed without additives and with the addition of α-tocopherol, curcumin and naringenin, respectively. Subsequently, some of the samples were crosslinked by means of γ-irradiation with two different doses, 7 and 14 Mrad ± 10 %, respectively. No thermal post-treatment was performed. Processing procedures of the samples of example 1 are listed in Table 1:

**Table 1: Processing procedures of samples of example 1.**

| Sample | Additive | Amount | Processing Temperature | γ Dose |
|---|---|---|---|---|
| | | [% w/w] | [°C] | [Mrad] |
| PE 30 | none | - | 170 | 0 |
| PE 33 | α-tocopherol | 0.1 | 210 | 0 |
| PE 32 | curcumin | 0.1 | 170 | 0 |
| PE 16 | none | - | 170 | 7 |
| PE A | α-tocopherol | 0.1 | 210 | 7 |
| PE 19 | curcumin | 0.1 | 170 | 7 |
| PE 20 | naringenin | 0.1 | 170 | 7 |
| PE 23 | none | - | 210 | 14 |
| PE B | α-tocopherol | 0.1 | 210 | 14 |
| PE 26 | curcumin | 0.1 | 170 | 14 |
| PE 27 | naringenin | 0.1 | 170 | 14 |

This experiment shows that it is possible to obtain completely homogeneous samples in "semi-industrial" sizes by the mixture of UHMWPE powder with several different antioxidants. Moreover, this example shows that it is possible to do the processing of the mixtures at the relatively low temperature of 170°C, which is 35°C above the melting temperature of UHMWPE.

### Example 2:

The free radical content of all irradiated samples of example 1 was determined. Determination of the free radical content was carried out by means of electron spin resonance (ESR) at room temperature 1 - 4 weeks after γ-irradiation. The ESR signal was measured on cylinders cut from the centre of the samples (length 15 mm, diameter 4 mm). These cylinders were inserted in a test tube which was positioned in the ESR apparatus (Bruker). The magnetic field was varied at a constant microwave frequency to obtain the absorption signal (first derivative) as a function of the magnetic field strength. The final ESR signal in arbitrary units [a.u.] is obtained by double integration of the primary absorption signal (Gerson F., Huber W., Electron Spin Resonance Spectroscopy of organic radicals, Wiley VCH, 2007; Weil J.A., Bolton J.R. Electron Paramagnetic Resonance, John Wiley&Sons, 2007). The ESR signal in percentages was derived from the value after double integration.

The results are shown in Table 2:

**Table 2: ESR signal of samples of example 2.**

| Sample | Additive | Amount | γDose | ESR Signal | ESR Signal |
|---|---|---|---|---|---|
| | | [% w/w] | [Mrad] | [a.u.] | [%] |
| PE 16 | none | - | 7 | 4.96 | 100 |
| PE A | α-tocopherol | 0.1 | 7 | 1.30 | 26.2 |
| PE 19 | curcumin | 0.1 | 7 | 5.25 | 105.8 |
| PE 20 | naringenin | 0.1 | 7 | 5.55 | 111.9 |
| PE 23 | none | - | 14 | 9.65 | 100 |
| PE B | α-tocopherol | 0.1 | 14 | 6.37 | 66.0 |
| PE 26 | curcumin | 0.1 | 14 | 10.30 | 106.7 |
| PE 27 | naringenin | 0.1 | 14 | 8.74 | 90.56 |
| PE steri | none | - | 3 | 3.62 | 55 |

Example 2 demonstrates that the addition of α-tocopherol to UHMWPE reduces the number of free radicals after crosslinking, whereas curcumin enhances the free radical count. The influence of naringenin on the number of free radicals in sintered and crosslinked UHMWPE products seems to be only moderate. PE steri shows the data relating to the gamma-sterilized UHMWPE standard sample.

### Example 3: _

With the same set of samples as in example 2, the influence of curcumin and naringenin on the oxidative stability of UHMWPE compounds was examined. All samples were accelerated aged according to ASTM F 2003 in an oxygen bomb at 5 atm oxygen pressure and 70 °C for 14 days. Oxidation indices of the aged components were determined by means of FTIR according to ASTM F 2102-06. The method for making measurements of the oxidation index according to this standard is as follows: 150 µm thick slices of the sample are made and tested to give a depth profile for the oxidation index. From the micro-slices taken of the sample the infrared spectrum is taken by means of FTIR with a resolution of 4cm⁻¹. The oxidation index is defined as the intensity of the peaks in the region 1680-1765cm⁻¹, which is associated with carbonile peaks, divided by the intensity in a reference band which lies between 1330 and 1396cm⁻¹.

Maximum oxidation indices after ageing (max. OI) are displayed in Table 3.

**Table 3: Maximum oxidation indices after artificial ageing of sample of example 3.**

| Sample | Additive | Amount | γ Dose | Max. OI after ageing |
|---|---|---|---|---|
| | | [% w/w] | [Mrad] | |
| PE 16 | none | - | 7 | 0.35 |
| PE A | α-tocopherol | 0.1 | 7 | 0.07 |
| PE 19 | curcumin | 0.1 | 7 | 0.08 |
| PE 20 | naringenin | 0.1 | 7 | 0.08 |
| PE 23 | none | - | 14 | 0.55 |
| PE B | α-tocopherol | 0.1 | 14 | 0.11 |
| PE 26 | curcumin | 0.1 | 14 | 0.11 |
| PE 27 | naringenin | 0.1 | 14 | 0.11 |
| PE steri | none | - | 3 | 0.41 |

This example demonstrates that samples without any thermal treatment and which contain curcumin (PE 19, PE 26) or naringenin (PE 20, PE 27) show minimal or no oxidation after artificial ageing compared to irradiated pure UHWMPE material (PE 6, PE 23). Irradiated samples containing curcumin or naringenin contain equal or more free radicals than the material without any additive (see Table 2) but nevertheless almost no oxidation is observed after artificial ageing. Conclusion: It is possible to obtain very low oxidation indices after artificial ageing with UHMWPE samples starting with a high number of free radicals before the ageing procedure.

### Example 4:

With the same set of samples as in the previous examples, crosslink densities and swell ratios were determined according to ASTM D 2765-95 Method C (3 test specimens per sample). Results are listed, represented by the molecular weight between crosslinks, M_{c}, in Table 4.

Additionally, trans-vinylene indices (TVI) were determined by normalizing the area of the trans-vinylene peak (965 cm⁻¹) with the area of a reference peak (1900 cm⁻¹). Four microtome sections were measured to a maximum depth of 2.5 mm and averaged to obtain qualitative information on the actual gamma dose (gamma dose in relation to other samples).

**Table 4: Molecular weight between crosslinks of samples of example 4**

| Sample | Additive | Amount | γ Dose | Swell Ratio | M_{c} | TVI Index |
|---|---|---|---|---|---|---|
| | | [% w/w] | [Mrad] | volumetric [-] | [g/mol] | [-] |
| PE 16 | none | - | 7 | 3.30 | 5433 | 0.080 |
| PE A | α-tocopherol | 0.1 | 7 | 3.48 | 5996 | 0.113 |
| PE 19 | curcumin | 0.1 | 7 | 3.41 | 5767 | 0.111 |
| PE 20 | naringenin | 0.1 | 7 | 3.41 | 5789 | 0.105 |
| PE 23 | none | - | 14 | | | |
| PE B | α-tocopherol | 0.1 | 14 | 2.82 | 3981 | 0.195 |
| PE 26 | curcumin | 0.1 | 14 | 2.82 | 3971 | 0.193 |
| PE 27 | naringenin | 0.1 | 14 | 2.69 | 3600 | 0.179 |
| PE steri | none | - | 3 | 3.77 | 6926 | 0.039 |

Experiment 4 clearly demonstrates that all additives consume radiation during the crosslinking process, leading to reduced crosslink densities compared to the pure UHMWPE sample (PE 16). Considering M_{c} in relation to the corresponding TVI indices, curcumin seems to be a slightly and naringenin a perspicuously more efficient crosslinking additive compared with α-tocopherol. However, all samples containing antioxidants irradiated with a dose of 7 Mrad show lower molecular weights between crosslinks than a standard sterilized UHMWPE sample.

### Example 5:

Mechanical properties of several samples of example 1 were measured. Yield stress, tensile strength and elongation at break were determined according to ASTM D 368 (5 test specimens per sample), fracture toughness according to DIN EN ISO 11542-2 (4 test specimens per sample). The results of the mechanical testings are listed in Table 5:

**Table 5: Mechanical properties of samples of example 5.**

| Sample | Additive | Amount | Processing Temperature | γ Dose | Yield Stress | Tensile Strength | Elongation at Break | Fracture Toughness |
|---|---|---|---|---|---|---|---|---|
| | | [% w/w] | [°C] | [Mrad] | [MPa] | [MPa] | [%] | [kJ/m²] |
| PE 30 | none | - | 170 | 0 | 22.5±0.3 | 41.6±3.0 | 470.8±26.4 | 216±13.6 |
| PE 33 | α-tocoph. | 0.1 | 210 | 0 | 24.0±0.2 | 40.1±2.6 | 457.3±26.7 | 232.6±5.9 |
| PE 32 | curcumin | 0.1 | 170 | 0 | 22.1±0.2 | 38.0±1.1 | 445.2±21.8 | 208.4±9.7 |
| PE 16 | none | - | 170 | 7 | 23.8±0.6 | 43.7±1.9 | 367.7±15.9 | |
| PE A | α-tocoph. | 0.1 | 210 | 7 | 24.6±0.2 | 40.9±5.7 | 403.6±50.0 | 144.3±4.4 |
| PE 19 | curcumin | 0.1 | 170 | 7 | 23.2±0.4 | 39.9±2.6 | 378.0±12.8 | 131.0±3.6 |

This example shows that materials can be processed at 170°C with excellent mechanical properties. Furthermore example 5 demonstrates that the addition of curcumin does not negatively affect the mechanical properties of sintered UHMWPE products. All non-irradiated samples meet the standard ISO 5834-2 type 1 (YS > 21.0 MPa, TS > 35.0 MPa, EAB > 300.0 %, FT > 180 kJ/m²), although the temperature of the mould did not exceed 170 °C during processing. All crosslinked samples meet the standard ISO 5834-2 type 2 (YS > 19.0 MPa, TS > 27.0 MPa, EAB > 300.0 %, FT > 90 kJ/m²).

## Claims

1. A method for fabricating an oxidation resistant UHMWPE material comprising the steps:
mixing a quantity of curcumin as an additive material with a UHMWPE powder;
moulding the mixture of UHMWPE powder and additive material to create a preform by applying a temperature above the melting point of the UHMWPE powder;
irradiating the preform with either gamma or electron beam radiation at a dose of between 2 and 20 Mrad; wherein
the irradiated preform with the additive material has an oxidation index as defined in ASTAM F 2102-06 after artificial ageing as defined in ASTM F 2003 which is the same or lower than that of a gamma-sterilized standard UHMWPE material.

2. The method according to claim 1, wherein the irradiation step of the preform increases the crosslinking in the preform such that the irradiated material has a molecular weight between crosslinks which is lower than that of the gamma-sterilized standard UHMWPE material,
wherein preferably the molecular weight between crosslinks of the irradiated preform is 15 - 70 % lower than that of the gamma-sterilized standard UHMWPE material.

3. The method according to any of the preceding claims, wherein no annealing or further heating is performed on the irradiated preform.

4. The method according to any of the preceding claims, wherein the amount of additive material mixed with the UHMWPE powder is in the range 0.001 to 0.5 wt %, more preferably in the range 0.02 to 0.2 wt %.

5. The method according to any of the preceding claims, wherein the maximum oxidation index of the irradiated preform after artificial ageing is below that of the gamma-sterilized standard UHMWPE material,
wherein preferably the maximum oxidation index of the irradiated preform after artificial ageing is between 5 and 75 % of the gamma-sterilized standard UHMWPE material, more preferably between 10 and 50 % of the gamma-sterilized standard UHMWPE material, further preferably between 15 and 30 % of the gamma-sterilized standard UHMWPE material.

6. The method according to any of the preceding claims, wherein the free radical content is measured by ESR, and the free radical content of the irradiated preform is higher than that of the gamma-sterilized standard UHMWPE material,
wherein preferably the free radical content is measured by ESR, and the free radical content of the irradiated preform is 110 - 500 % that of the gamma-sterilized standard UHMWPE material, more preferably the free radical content of the irradiated preform is 120 - 400 % that of the gamma-sterilized standard UHMWPE preform, further preferably the free radical content of the irradiated preform is 130 - 300 % that of the gamma-sterilized standard UHMWPE material.

7. An oxidation resistant UHMWPE material, comprising a mixture of UHMWPE and curcumin as an additive material as a preform, which has been irradiated with gamma or electron beam irradiation at a dose between 2 and 20 Mrad; wherein
the irradiated mixture of UHMWPE and additive material has an oxidation index as defined in ASTM F 2102-06 after artificial ageing as defined in ASTM F 2003 which is the same or lower than that of a gamma-sterilized standard UHMWPE material.

8. The material according to claim 7, wherein the material has a free radical content which is greater than the gamma-sterilized standard UHMWPE material.

9. The material according to claim 7, wherein the irradiated preform has a crosslinking density which is lower than that of the gamma-sterilized standard UHMWPE material, preferably the molecular weight between crosslinks of the irradiated preform is 15 - 70 % lower than that of the gamma-sterilized standard UHMWPE material.

10. The material according to any of claims 7 to 9, wherein the irradiated preform is not exposed to an annealing or further heating.

11. The material according to any of claims 7 to 11, wherein the amount of additive in the UHMWPE material is in the range 0.001 to 0.5 wt %, preferably the amount of additive in the UHMWPE material is in the range 0.02 to 0.2 wt %.

12. The material according to any of claims 7 to 11, wherein the maximum oxidation index of the irradiated preform after artificial ageing is below that of the gamma-sterilized standard UHMWPE material,
wherein preferably the maximum oxidation index of the irradiated preform after artificial ageing is between 5 and 75 % of the gamma-sterilized standard UHMWPE material, more preferably between 10 and 50 % of the gamma-sterilized standard UHMWPE material, further preferably between 15 and 30 % of the gamma-sterilized standard UHMWPE material.

13. The material according to any claims 7 to 12, wherein the free radical content is measured by ESR, and the free radical content of the irradiated preform is higher than that of the gamma-sterilized standard UHMWPE material, further preferably the free radical content is measured by ESR, and the free radical content of the irradiated preform is 110 - 500 % that of the gamma-sterilized standard UHMWPE material, more preferably the free radical content of the irradiated preform is 120 - 400 % that of the gamma-sterilized standard UHMWPE material.

## Patentansprüche

1. Verfahren zum Herstellen eines oxidationsbeständigen UHMWPE Materials, welches die Schritte enthält:
Mischen einer Menge von Kurkumin als ein Zusatzmaterial mit einem UHMWPE Pulver;
Giessen der Mischung aus UHMWPE Pulver und dem Zusatzmaterial, um eine Vorform auszubilden, durch Anlegen von einer Temperatur oberhalb des Schmelzpunktes des UHMWPE Pulvers;
Bestrahlen der Vorform mit einer Gamma- oder Elektronenstrahl-Bestrahlung bei einer Dosis zwischen 2 und 20 Mrad; wobei
die bestrahlte Vorform mit dem Zusatzmaterial einen Oxidationsindex hat, wie in ASTM F 2102-06 definiert, nach einem künstlichen Altern, wie in ASTM F 2003 definiert, welcher gleich oder niedriger ist als jener eines Gamma-sterilisierten Standard-UHMWPE Materials.

2. Verfahren nach Anspruch 1, bei welchem der Schritt zum Bestrahlen der Vorform die Vernetzung in der Vorform derart erhöht, dass das bestrahlte Material ein Molekulargewicht zwischen Vernetzungen hat, welches geringer ist als jenes vom Gamma-sterilisierten Standard-UHMWPE Material,
wobei das Molekulargewicht zwischen Vernetzungen der bestrahlten Vorform vorzugsweise um 15 - 70 % geringer ist als jenes vom Gamma-sterilisierten Standard-UHMWPE Material.

3. Verfahren nach einem der vorherigen Ansprüche, bei welchem weder ein Ausglühen noch eine weitere Erwärmung auf die bestrahlte Vorform durchgeführt wird.

4. Verfahren nach einem der vorherigen Ansprüche, bei welchem die Menge von Zusatzmaterial, welches mit dem UHMWPE Pulver gemischt wird, im Bereich von 0,001 bis 0,5 wt %, bevorzugt im Bereich von 0,02 bis 0,2 wt %, ist.

5. Verfahren nach einem der vorherigen Ansprüche, bei welchem der maximale Oxidationsindex der bestrahlten Vorform nach dem künstlichen Altern geringer ist als jener des Gamma-sterilisierten Standard-UHMWPE Materials,
wobei der maximale Oxidationsindex der bestrahlten Vorform nach dem künstlichen Altern bevorzugt zwischen 5 und 75 % des Gamma-sterilisierten Standard-UHMWPE Materials, weiter bevorzugt zwischen 10 und 50 % des Gamma-sterilisierten Standard-UHMWPE Materials, ferner bevorzugt zwischen 15 und 30 % des Gamma-sterilisierten Standard-UHMWPE Materials, ist.

6. Verfahren nach einem der vorherigen Ansprüche, bei welchem der Anteil freier Radikaler durch ESR gemessen wird, und wobei der Anteil freier Radikaler der bestrahlten Vorform höher ist als jener des Gamma-sterilisierten Standard-UHMWPE Materials,
wobei vorzugsweise der Anteil freier Radikaler durch ESR gemessen wird, und wobei der Anteil freier Radikaler der bestrahlten Vorform 110-500 % dessen des Gamma-sterilisierten Standard-UHMWPE Materials beträgt, der Anteil freier Radikaler der bestrahlten Vorform weiter bevorzugt 120-400 % dessen des Gamma-sterilisierten Standard-UHMWPE Materials beträgt, der Anteil freier Radikaler der bestrahlten Vorform ferner bevorzugt 130 - 300 % dessen des Gamma-sterilisierten Standard-UHMWPE Materials beträgt.

7. Oxidationsbeständiges UHMWPE Material, welches eine Mischung aus UHMWPE und Kurkumin als ein Zusatzmaterial als eine Vorform enthält, welche durch Gamma- oder Elektronenstrahl-Bestrahlung bei einer Dosis zwischen 2 und 20 Mrad bestrahlt ist; wobei die bestrahlte Mischung aus UHMWPE und Zusatzmaterial einen Oxidationsindex hat, wie in ASTM F 2102-06 definiert, nach einem künstlichen Altern, wie in ASTM F 2003 definiert, welcher gleich oder niedriger ist als jener von einem Gamma-sterilisierten Standard-UHMWPE Material.

8. Material nach Anspruch 7, wobei das Material einen Anteil freier Radikaler hat, welcher höher ist als jener des Gamma-sterilisierten Standard-UHMWPE Materials.

9. Material nach Anspruch 7, wobei die bestrahlte Vorform eine Vernetzungsdichte hat, welche geringer ist als jene des Gamma-sterilisierten Standard-UHMWPE Materials, wobei das Molekulargewicht zwischen Vernetzungen der bestrahlten Vorform vorzugsweise um 15 - 70 % geringer ist als jenes vom Gamma-sterilisierten Standard-UHMWPE Material.

10. Material nach einem der Ansprüche 7 bis 9, wobei die bestrahlte Vorform weder einem Ausglühen noch einer weiteren Erwärmung ausgesetzt ist.

11. Material nach einem der Ansprüche 7 bis 10, wobei die Menge von Zusatzmaterial im UHMWPE Material im Bereich von 0,001 bis 0,5 wt % ist, wobei die Menge von Zusatzmaterial im UHMWPE Material bevorzugt im Bereich von 0,02 bis 0,2 wt % ist.

12. Material nach einem der Ansprüche 7 bis 11, wobei der maximale Oxidationsindex der bestrahlten Vorform nach dem künstlichen Altern geringer ist als jener des Gamma-sterilisierten Standard-UHMWPE Materials,
wobei der maximale Oxidationsindex der bestrahlten Vorform nach dem künstlichen Altern bevorzugt zwischen 5 und 75 % des Gamma-sterilisierten Standard-UHMWPE Materials, weiter bevorzugt zwischen 10 und 50 % des Gamma-sterilisierten Standard-UHMWPE Materials, ferner bevorzugt zwischen 15 und 30 % des Gamma-sterilisierten Standard-UHMWPE Materials, ist.

13. Material nach einem der Ansprüche 7 bis 12, bei welchem der Anteil freier Radikaler durch ESR gemessen ist und der Anteil freier Radikaler der bestrahlten Vorform höher ist als jener des Gamma-sterilisierten Standard-UHMWPE Materials, wobei, ferner bevorzugt, der Anteil freier Radikaler durch ESR gemessen ist und der Anteil freier Radikaler der bestrahlten Vorform 110 - 500 % dessen des Gamma-sterilisierten Standard-UHMWPE Materials beträgt, wobei, weiter bevorzugt, der Anteil freier Radikaler der bestrahlten Vorform 120-400 % dessen des Gamma-sterilisierten Standard-UHMWPE Materials beträgt.

## Revendications

1. Procédé de fabrication d'un matériau UHMWPE résistant à l'oxydation comprenant les étapes consistant à :
mélanger une quantité de curcumine en tant que matière additive à une poudre d'UHMWPE ;
mouler le mélange de poudre d'UHMWPE et de matière additive pour créer une préforme par l'application d'une température supérieure au point de fusion de la poudre d'UHMWPE ;
irradier la préforme avec un rayonnement gamma ou à faisceau d'électrons à une dose comprise entre 2 et 20 Mrad ; dans lequel
la préforme irradiée avec la matière additive a un indice d'oxydation tel que défini par la norme ASTAM F 2102-06 après vieillissement artificiel tel que défini par la norme ASTM F 2003 qui est identique ou inférieur à celui d'un matériau UHMWPE standard stérilisé par rayonnement gamma.

2. Procédé selon la revendication 1, dans lequel l'étape d'irradiation de la préforme augmente la réticulation dans la préforme de sorte que le matériau irradié a un poids moléculaire entre les réticulations qui est inférieur à celui du matériau UHMWPE standard stérilisé par rayonnement gamma,
dans lequel de préférence le poids moléculaire entre les réticulations de la préforme irradiée est de 15 à 70 % inférieur à celui du matériau UHMWPE standard stérilisé par rayonnement gamma.

3. Procédé selon l'une quelconque des revendications précédentes, dans lequel aucun recuit ou chauffage supplémentaire n'est réalisé sur la préforme irradiée.

4. Procédé selon l'une quelconque des revendications précédentes, dans lequel la quantité de matière additive mélangée à la poudre d'UHMWPE est comprise dans la plage allant de 0,001 à 0,5 % en poids, plus préférablement dans la plage allant de 0,02 à 0,2 % en poids.

5. Procédé selon l'une quelconque des revendications précédentes, dans lequel l'indice d'oxydation maximal de la préforme irradiée après vieillissement artificiel est inférieur à celui du matériau UHMWPE standard stérilisé par rayonnement gamma,
dans lequel de préférence l'indice d'oxydation maximal de la préforme irradiée après vieillissement artificiel est compris entre 5 et 75 % du matériau UHMWPE standard stérilisé par rayonnement gamma, plus préférablement entre 10 et 50 % du matériau UHMWPE standard stérilisé par rayonnement gamma, encore plus préférablement compris entre 15 et 30 % du matériau UHMWPE standard stérilisé par rayonnement gamma.

6. Procédé selon l'une quelconque des revendications précédentes, dans lequel la teneur en radicaux libres est mesurée par ESR, et la teneur en radicaux libres de la préforme irradiée est supérieure à celle du matériau UHMWPE standard stérilisé par rayonnement gamma,
dans lequel de préférence la teneur en radicaux libres est mesurée par ESR, et la teneur en radicaux libres de la préforme irradiée est de 110 à 500 % celle du matériau UHMWPE standard stérilisé par rayonnement gamma, plus préférablement la teneur en radicaux libres de la préforme irradiée est de 120 à 400 % celle du matériau UHMWPE standard stérilisé par rayonnement gamma, encore plus préférablement la teneur en radicaux libres de la préforme irradiée est de 130 à 300 % celle du matériau UHMWPE standard stérilisé par rayonnement gamma.

7. Matériau UHMWPE résistant à l'oxydation, comprenant un mélange d'UHMWPE et de curcumine en tant que matière additive sous forme de préforme, qui a été irradié avec un rayonnement gamma ou à faisceau d'électrons à une dose comprise entre 2 et 20 Mrad ; dans lequel
le mélange irradié d'UHMWPE et de matière additive a un indice d'oxydation tel que défini par la norme ASTM F 2102-06 après vieillissement artificiel tel que défini par la norme ASTM F 2003 qui est identique ou inférieur à celui d'un matériau UHMWPE standard stérilisé par rayonnement gamma.

8. Matériau selon la revendication 7, le matériau ayant une teneur en radicaux libres qui est supérieure à celle du matériau UHMWPE standard stérilisé par rayonnement gamma.

9. Matériau selon la revendication 7, dans lequel la préforme irradiée a une densité de réticulation qui est inférieure à celle du matériau UHMWPE standard stérilisé par rayonnement gamma, de préférence le poids moléculaire entre les réticulations de la préforme irradiée est de 15 à 70 % inférieur à celui du matériau UHMWPE standard stérilisé par rayonnement gamma.

10. Matériau selon l'une quelconque des revendications 7 à 9, dans lequel la préforme irradiée n'est pas exposée à un recuit ou un chauffage supplémentaire.

11. Matériau selon l'une quelconque des revendications 7 à 10, dans lequel la quantité d'additif dans le matériau UHMWPE est comprise dans la plage allant de 0,001 à 0,5 % en poids, de préférence la quantité d'additif dans le matériau UHMWPE est comprise dans la plage allant de 0,02 à 0,2 % en poids.

12. Matériau selon l'une quelconque des revendications 7 à 11, dans lequel l'indice d'oxydation maximal de la préforme irradiée après vieillissement artificiel est inférieur à celui du matériau UHMWPE standard stérilisé par rayonnement gamma,
dans lequel de préférence l'indice d'oxydation maximal de la préforme irradiée après vieillissement artificiel est compris entre 5 et 75 % du matériau UHMWPE standard stérilisé par rayonnement gamma, plus préférablement entre 10 et 50 % du matériau UHMWPE standard stérilisé par rayonnement gamma, encore plus préférablement compris entre 15 et 30 % du matériau UHMWPE standard stérilisé par rayonnement gamma.

13. Matériau selon l'une quelconque des revendications 7 à 12, dans lequel la teneur en radicaux libres est mesurée par ESR, et la teneur en radicaux libres de la préforme irradiée est supérieure à celle du matériau UHMWPE standard stérilisé par rayonnement gamma, de préférence la teneur en radicaux libres est mesurée par ESR, et la teneur en radicaux libres de la préforme irradiée est de 110 à 500 % celle du matériau UHMWPE standard stérilisé par rayonnement gamma, plus préférablement la teneur en radicaux libres de la préforme irradiée est de 120 à 400 % celle du matériau UHMWPE standard stérilisé par rayonnement gamma.
